# EUROPEAN PATENT APPLICATION

(11) **EP 2 775 630 A1**
(43) Date of publication of application: **10.09.2014**
(21) Application number: 14157015.0
(22) Date of filing: 27.02.2014
(51) Int. Cl.: H04B 5/00

(54) **High speed network contactless rotary joint**

(30) Priority: 05.03.2013 US 201313785197
(71) Applicant: Schleifring und Apparatebau GmbH, 82256 Fürstenfeldbruck (DE)
(72) Inventor: Lindorfer, Stephan, 82275 Emmering (DE)
(74) Representative: Lohr, Georg

(57) **Abstract**

A contactless data link for connecting a first high speed network to a second high speed network, rotating relative to the first high speed network, comprises a first data processor connected to the first network, and a second data processor connected to the second network. It furthermore comprises a plurality of capacitive data links, connected between the first data processor and the second data processor. Each capacitive data link comprises a transmitter amplifier, a capacitive coupler and at least one receiver amplifier. For communication with the networks, each data processor comprises a physical layer network interface connected to one of the networks. An encoder may be provided for encoding the networks signals into signals, which may be transferred over the contactless data links, while a decoder may be provided for decoding the signals from the networks into signals for the network.

## Description

### Field of the invention

The invention relates to capacitive couplers for non-contacting or contactless signal and data transmission, in particular to capacitive rotating transmission devices like rotary joints. Such transmission devices may be used in computer tomography scanners, also called CT scanners.

### Description of the related art

In CT scanners, a rotating x-ray tube and an x-ray detector generate high-speed imaging data. These may be transmitted from the rotating part to the stationary part. Furthermore, control signals for controlling the device and specifically the power supply of the x-ray tube may be transmitted from the stationary to the rotating part. Many applications exist where there is the need to transmit control signals between a rotor and a stator like in windmills, revolving transfer machines, bottling plants, packaging machines or placement heads of insertion machines.

A contactless data link is disclosed in US patent 6,956,450 B1. Here, binary data is fed into a transmission line at the rotating part. The transmission line has a low pass filter characteristic to suppress high frequency noise. It is terminated at its ends with the characteristic impedance of the line. Furthermore, it is split into two segments of equal length, each spanning half the circumference of a rotating structure. This transmission system cannot transfer signals, as they are required by the physical layer specification of standard communication networks like Ethernet.

### Summary of the invention

The problem to be solved by the invention is finding a capacitive transmission system for rotary joints suitable for transmitting data of high-speed communication networks, like Ethernet. The solution should be simple, inexpensive, modular, and easy to manufacture.

Solutions of the problem are described in the independent claims. The dependent claims relate to further improvements of the invention.

According to the invention, a capacitive data link has a first part being rotatable against a second part. The first part may be rotating, while the second part is stationary, or the first part may be stationary while the second part is rotating. There is at least one contactless, capacitive data link between the first and the second part. Preferably, a contactless data link comprises at least one transmitter amplifier, feeding a transmitting element. Preferably, the transmitting element comprises a transmission line, which may be a strip line or any other kind of line, like a low pass filter line. The transmitting element should be able to conduct electrical signal and/or electromagnetic waves. The transmission line preferably has a circular shape and comprises a termination section, where the transmission line is interrupted and the open ends are terminated preferably by a termination resistor. Preferably, the line is fed by the transmitter amplifier at a location opposite to the termination section, dividing the transmission line into two sub-sections having almost the same length.

At the second part, there is a receiving coupler, which preferably is in close proximity to the transmission line. It picks up electrical signals from the transmission line. These signals are amplified by a receiver amplifier, which is also part of the data link. Furthermore, there may be an encoder before the transmitter amplifier, and there may be a decoder after the receiver amplifier for adapting encoding of signals to a specific coding scheme.

In a further embodiment, there is a plurality of data links combined by at least one data processor. Preferably, there is one data processor at the first side and another data processor at the second side. It is preferred, if each data processor has a physical layer adaptor which interfaces to a specific high speed network like Ethernet, which may be according to one of the following standards: 10OBaseTx, 1000Base-T, and 10GBase-T. Generally, the term network used herein may also be applicable to bus systems or high-speed bus systems. This physical layer interface may have an output to deliver signals to a transmitter amplifier and an input for receiving signals from a receiver amplifier. The output may further be connected to an encoder for encoding the signals adapted to the specific need of the data link. There may further be at least one demultiplexer for dividing the signal into a plurality of sub-signals, which may be transmitted in parallel over a plurality of capacitive data links. In order to adapt to the specific physical layer the data processor might change the type of modulation, encoding, protocol and channel coding between the network and the contactless link.

In addition to this transmitting section, the data processor may have a receiving section, receiving signals from a contactless data link. It preferably has a multiplexer to multiplex a plurality of signals from a plurality of contactless data links into a single signal. There may furthermore be a decoder for decoding the previously encoded signal. The decoded signals are fed into the input of the physical layer interface. Generally, the encoder and the decoder may be devices for changing the coding, which may be a combination of decoder and encoder. Therefore, the first encoder in the transmitting section may also comprise a decoder for decoding the signals from the network, which are encoded into signals suitable for the contactless data link after decoding, which preferably are binary signals. Furthermore, the decoder in the receiving section may also comprise an encoder to encode the decoded signals into a format suitable for the high-speed network. In a preferred embodiment, the data processor, at least one receiver and at least one transmitter and their corresponding transmit and receive antennas are one mechanical unit, e.g. components located on a single printed circuit board. With the electronic components mounted to one side of a printed circuit board, the opposite side is used to hold the transmission line as transmission coupler and a receiving coupler. With two boards facing each other with their couplers mechanically configured that a transmission line forming a ring is opposite to a receiving coupler even during rotation, a contactless link can be formed out of two printed circuit boards.

### Description of Drawings

In the following, the invention will be described by way of example, without limitation of the general inventive concept, on examples of embodiment with reference to the drawings.
Figure 1 shows a High Speed Network Contactless Rotary Joint
Figure 2 shows a second embodiment
Figure 3 shows an illustration of a general CT scanner.

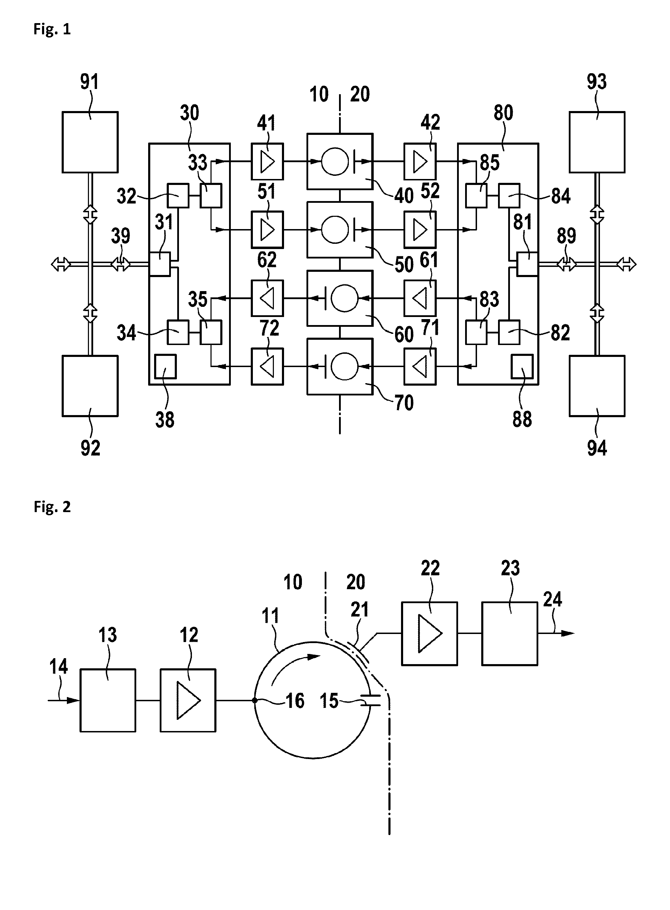

In figure 1, a preferred embodiment according to the invention is shown. It has a first part 10, which may be the rotating part, and a second part 20, which may be the stationary part or vice versa. Between the first part 10 and the second part 20, there are four contactless data links, comprising four capacitive couplers 40, 50, 60, 70, which are fed by four transmitter amplifiers 41, 51, 61, 71, further forwarding the transmitted signals to four receiver amplifiers 42, 52, 62, 72. The data links based on the capacitive couplers 40 and 50 may transmit data from the first part 10 to the second part 20, while the data links based on the capacitive couplers 60 and 70 may transmit data from the second part 20 to the first part 10. It is obvious that the number of capacitive data links can be modified in total and in relationship to each direction required to specific needs. Accordingly, there may be only a single capacitive data link or a high number of such links. The first part 10 has a first data processor 30, while the second part 20 has a second data processor 80. In this embodiment, both data processors have a similar design. They have a transmission section, which is receiving signals from a high-speed network physical layer interface 31, 81, to an encoder 32, 82, further supplying encoded signals to a demultiplexer 33, 83, which splits the signal into two parallel signals for simultaneous transmission. The physical layer interfaces 31, 81 may interface to a plurality of network lines. At the receiving side, there is a multiplexer 35, 85 receiving signals from receiving amplifiers and generating a signal data stream which is further decoded by decoder 34, 84, and fed into the physical layer interfaces 31, 81. Both data processors are controlled by control units 38, 88. The first data processor may be connected by a first network 39 to a first network node 91, a second network node 92, and further network nodes of the first network. The second data processor 80 may be connected by a second network 89 to a first network node 93, a second network node 94, and further network nodes of the second network.

Figure 2 shows a simple embodiment of the invention. The capacitive data link comprises a transmission line 11, which has a termination section 15 and a feeding point 16, preferably opposite to the termination section. Data signals to be transmitted are fed into the feeding point by a transmitter amplifier 12, which may receive signals from an encoder 13, which are delivered by a data input 14. At the receiving side, there is a receiving coupler 21, moving in close proximity to the transmitting line, capacitively picking up signals from the transmitting line and feeding the signals to a receiver amplifier 22, which are further forwarded to a decoder 23, having a data output 24.

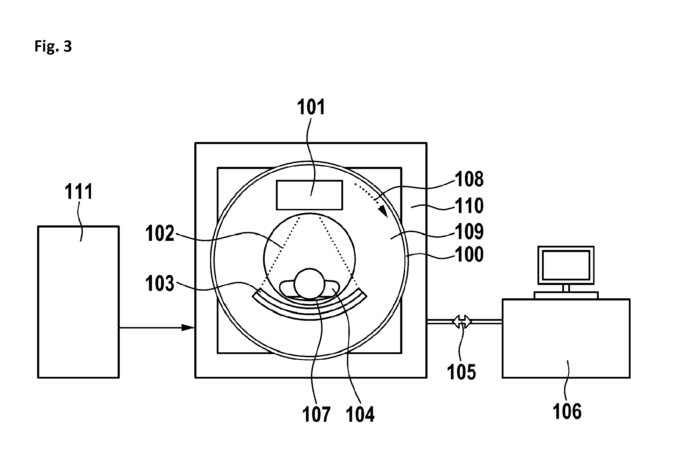

Figure 3 shows schematically a CT scanner gantry. The stationary part is suspended within a massive frame 110. The rotating part 109 of the gantry is rotatably mounted with respect to the stationary part and rotates along the rotation direction 108. It supports an X - ray tube 101 for generating an X-ray beam 102 that radiates through a patient 104 lying on a table 107 and is intercepted by a detector 103 and converted to electrical signals and imaging data thereof. Electrical power from power supply unit 111 may be transmitted by a slipring (not shown) to the rotating part. The data obtained by the detector 103 are transmitted via high-speed network contactless rotary joint 100 to an evaluation unit 106 by means of a data bus or network 105. Is obvious, that the application of the invention is not limited to CT scanners.

### List of reference numerals

- 10: first part
- 11: transmission line
- 12: transmitter amplifier
- 13: encoder
- 14: data input
- 15: termination section
- 16: feeding point
- 20: second part
- 21: receiving coupler
- 22: receiver amplifier
- 23: decoder
- 24: data output
- 30: first data processor
- 31: first physical interface (PHY)
- 32: first encoder
- 33: first demultiplexer
- 34: first decoder
- 35: first multiplexer
- 38: first control unit
- 39: first network
- 40: first capacitive coupler
- 41: first transmitter amplifier
- 42: first receiver amplifier
- 50: second capacitive coupler
- 51: second transmitter amplifier
- 52: second receiver amplifier
- 60: third capacitive coupler
- 61: third transmitter amplifier
- 62: third receiver amplifier
- 70: fourth capacitive coupler
- 71: fourth transmitter amplifier
- 72: fourth receiver amplifier
- 80: second data processor
- 81: second physical interface (PHY)
- 82: second encoder
- 83: second demultiplexer
- 84: second decoder
- 85: second multiplexer
- 88: second control unit
- 89: second network
- 91: first network node of first network
- 92: second network node of first network
- 93: first network node of second network
- 94: second network node of second network
- 100: contactless rotary joint
- 101: x-ray tube
- 102: x-ray beam
- 103: x-ray detector
- 104: patient
- 105: network
- 106: evaluation unit
- 107: patient table
- 108: rotation direction
- 109: rotating part
- 110: frame

## Claims

1. Contactless data link for connecting a first high speed network (39) to a second high speed network (89), rotating relative to the first high speed network, comprising
- a first data processor (30) connected to the first network, and a second data processor (80) connected to the second network,
- a plurality of capacitive data links, connected between the first data processor and the second data processor, each capacitive data link comprising at least one transmitter amplifier (41, 51, 61, 71), at least one capacitive coupler (40, 50, 60, 70) and at least one receiver amplifier (42, 52, 62, 72),
**characterized in, that**
each data processor (30, 80) comprises a physical layer network interface (31, 81) connected to either the first or the second network (39, 89), and further comprises at least one encoder (32, 82) for encoding the network signals into signals which may be transferred over the contactless data links, and at least one decoder (35, 85) for decoding the signals from the data links into signals for the network.

2. Contactless data link according to claim 1,
**characterized in, that**
at least one of the first data processor (30) or second data processor (80) comprises at least one demultiplexer (33) for demultiplexing the signals of the high-speed network (90) into a plurality of signals for a plurality of contactless data links.

3. Contactless data link according to any one of the preceding claims,
**characterized in, that**
at least one of the first data processor (30) or second data processor (80) comprises at least one multiplexer (35) for multiplexing a plurality of signals received by contactless data links into a signal suitable for the high-speed network.

4. Contactless data link according to any one of the preceding claims,
**characterized in, that**
at least one transmitter amplifier (41, 51, 61, 71), at least one capacitive coupler (40, 50, 60, 70) and at least one receiver amplifier (42, 52, 62, 72) are located on a single printed circuit board.

5. Contactless data link according to any one of the preceding claims,
**characterized in, that**
at least one data processor (30, 80) is located on the single printed circuit boa rd.

6. Contactless data link according to any one of the preceding claims,
**characterized in, that**
at least one transmitter amplifier (41, 51, 61, 71), at least one capacitive coupler (40, 50, 60, 70) and at least one receiver amplifier (42, 52, 62, 72) are located on a single printed circuit board, and a transmission line acting as transmission coupler, and a receiving coupler are copper structures on the opposite side of the printed circuit board to the transmitter amplifier (41, 51, 61, 71) and at least one receiver amplifier (42, 52, 62, 72).

7. Contactless data link according to any one of the preceding claims,
**characterized in, that**
at least one data processor (30, 80) is located on the single printed circuit board, and a transmission line acting as transmission coupler, and a receiving coupler are copper structures on the opposite side of the printed circuit board to the at least one data processor (30, 80).
